# EUROPÄISCHE PATENTSCHRIFT

(11) **EP 3 442 846 B1**
(45) Veröffentlichungstag und Bekanntmachung des Hinweises auf die Patenterteilung: **24.03.2021**
(21) Anmeldenummer: 17724065.2
(22) Anmeldetag: 18.05.2017
(51) Int. Cl.: B61D 29/00, B60Q 3/20, B60Q 3/43, B60Q 3/53

(54) **BELEUCHTUNGSEINRICHTUNG FÜR EIN FAHRZEUG**
ILLUMINATION DEVICE FOR A VEHICLE
DISPOSITIF D'ÉCLAIRAGE POUR UN VÉHICULE

(30) Priorität: 25.05.2016 AT 504722016
(43) Veröffentlichungstag der Anmeldung: 20.02.2019
(73) Patentinhaber: Siemens Mobility Austria GmbH, 1210 Wien (AT)
(72) Erfinder: STOESZ, Harald, 2103 Langenzersdorf (AT)
(74) Vertreter: Deffner, Rolf
(86) Internationale Anmeldenummer: PCT/EP2017/061974
(87) Internationale Veröffentlichungsnummer: WO 2017/202685

(56) Entgegenhaltungen:
- WO-A1-98/10219
- WO-A1-2016/072016
- GB-A- 2 324 901
- JP-A- 2006 347 234
- US-A- 6 050 703
- US-A1- 2003 179 585
- US-B1- 6 364 508

## Beschreibung

### Technisches Gebiet

Die Erfindung betrifft eine Beleuchtungseinrichtung für ein Fahrzeug, insbesondere für ein Schienenfahrzeug.

### Stand der Technik

Die Beleuchtung von Passagierräumen in Fahrzeugen, insbesondere Passagierschienenfahrzeugen erfolgt vorzugsweise mittels hinter lichtdurchlässigen Abdeckungen angeordneten Leuchtmitteln. Eine Zugänglichkeit zu diesen Leuchtmittel ist typischerweise dadurch gegeben, dass diese Abdeckungen abnehmbar ausgeführt sind. Dazu sind geeignete Verschlüsse oder Verschraubungen vorzusehen, welche vom Passagierraum aus zugänglich sind. Aus ästhetischen Gründen oder zur Erschwerung von Vandalismus sind solche Verschlüsse jedoch in bestimmten Anwendungen unerwünscht. Der Einsatz lichtemittierender Dioden (LED) als Leuchtmittel hat Ausführungsformen von Passagierraumbeleuchtungen ermöglicht, bei welchen keine unmittelbare Zugänglichkeit der Leuchtmittel mehr gegeben ist und diese hinter fest angeordneten lichtdurchlässigen Abdeckungen angeordnet sind. An dieser Einbauposition ist eine Wartung der Leuchtmittel nur nach Demontage größerer Baugruppen, beispielsweise der Dachverkleidung eines Schienenfahrzeugs möglich. Die von LED erwarteten Lebensdauern können im praktischen Betrieb oft nicht erzielt werden, sodass ein Austausch der LED Leuchtmittel erforderlich ist. Dazu ist gemäß dem Stand der Technik entweder das Vorsehen einer abnehmbaren lichtdurchlässigen Abdeckung oder die Demontage großer Baugruppen erforderlich

Das Dokument US 6 050 703 A beschreibt eine Weihnachtsbeleuchtung für ein Gebäude, umfassend eine mit dem Gebäude verbundene Gleitführung und eine Mehrzahl an Beleuchtungsmodulen, wobei die Beleuchtungsmodule untereinander kettenförmig und flexibel verbindbar sind und jeweils mit mindestens einem Führungsbolzen ausgestattet sind, welcher zum formschlüssigen Eingriff in die Gleitführung ausgebildet ist.

### Darstellung der Erfindung

Der Erfindung liegt daher die Aufgabe zugrunde, eine Beleuchtungseinrichtung für ein Fahrzeug anzugeben, welche mit einer fest angeordneten lichtdurchlässigen Abdeckung ausgestattet werden kann und trotzdem eine Wartung, insbesondere ein Austausch schadhafter Leuchtmittel einfach erfolgen kann.

Die Aufgabe wird durch eine Beleuchtungseinrichtung für ein Fahrzeug mit den Merkmalen des Anspruchs 1 gelöst. Vorteilhafte Ausgestaltungen sind Gegenstand untergeordneter Ansprüche.

Dem Grundgedanken der Erfindung nach wird eine Beleuchtungseinrichtung für ein Fahrzeug aufgebaut, welche eine mit dem Fahrzeug verbindbare Gleitführung und eine Mehrzahl an Beleuchtungsmodulen umfasst, wobei die Beleuchtungsmodule untereinander kettenförmig und flexibel verbindbar sind und jeweils mit mindestens einem Führungsbolzen ausgestattet sind, welcher zum formschlüssigen Eingriff in die Gleitführung ausgebildet ist.

Dadurch ist der Vorteil erzielbar, eine Beleuchtungseinrichtung aus Beleuchtungsmodulen aufbauen zu können, welche entlang ihrer Einbaulage mittels einer Gleitführung geführt ist und welche dabei an den Enden der Gleitführung in diese eingebracht und entlang der Gleitführung verschoben werden kann. Zur Montage und zur Demontage der Beleuchtungsmodule ist dadurch nur eine Zugänglichkeit der Enden der Gleitführung erforderlich, der dazwischenliegende Abschnitt der Gleitführung bzw. der Beleuchtungseinrichtung kann dabei beispielsweise mit fest angeordneten lichtdurchlässigen Abdeckungen verschlossen sein.

Erfindungsgemäß sind eine Mehrzahl von Beleuchtungsmodulen kettenartig und flexibel untereinander verbunden und können in dieser Zusammenstellung jeweils nacheinander formschlüssig in die Gleitführung eingebracht werden. Es ist besonders empfehlenswert, diese Zusammenstellung von Beleuchtungsmodulen mittels eines Seils oder einer Schnur gezogen entlang der Gleitführung zu bewegen. Solcherart kann im Gegensatz zu einem Einschieben der Zusammenstellung von Beleuchtungsmodulen in die Gleitführung ein Verkanten der Führungsbolzen in der Gleitführung zuverlässig verhindert werden.

Erfindungsgemäß sind die Führungsbolzen sowohl für den formschlüssigen Eingriff in die Gleitführung als auch zur kettenartigen flexiblen Verbindung der Beleuchtungsmodule untereinander ausgebildet. Dadurch ist der Vorteil erzielbar, beide Funktionalitäten mittels eines Bauteils umsetzen zu können und somit eine kostensparende Beleuchtungseinrichtung realisieren zu können. Dabei durchdringt der Führungsbolzen beide zur Verbindung kommenden Beleuchtungsmodule und bildet dabei ein Drehgelenk zwischen jeweils benachbarten Beleuchtungsmodulen. Weiters weist der Führungsbolzen dabei eine zum formschlüssigen Eingriff in die Gleitführung geeignete Ausformung auf, mittels welcher er in dieser Gleitführung schiebbar gelagert ist.

Erfindungsgemäße Beleuchtungsmodule können besonders vorteilhaft als sogenannte Platinen ausgeführt werden, wobei an diesen Platinen Leuchtmitteln angeordnet. Dabei können lichtemittierende Dioden (LED) eingesetzt werden.

Die Gleitführung für den formschlüssigen Eingriff der Führungsbolzen erfolgt bevorzugterweise mit C-förmigen Querschnitt. Diese Gleitführung kann beispielsweise als Ausformung eines Leichtmetall-Strangpreßprofils ausgeführt werden. Dies ist insbesondere vorteilhaft, da im Deckenbereich eines Fahrzeugs sehr häufig LeichtmetallStrangpreßprofil angeordnet sind, welche weitere Aufgaben wie die Führung von Leitungen, Luftkanälen oder ähnlichen wahrnehmen, sodass eine Gleitführung sehr einfach zugefügt werden kann.

Die Gleitführung bzw. die Beleuchtungseinrichtung kann sich linienförmig erstrecken, beispielsweise entlang der Längsachse eines Fahrzeugs, oder sie kann entlang ihres Verlaufs mindestens einen bogenförmigen Abschnitt umfassen. Solcherart sind auch runde Beleuchtungseinrichtungen realisierbar.

Besonders vorteilhaft ist der Einsatz gegenständlicher Erfindung, wenn sich die Beleuchtungseinrichtung entlang einer Längsachse des Fahrzeugs erstreckt und die Beleuchtungsmodule an den Stirnseiten des Fahrzeuginneren in die Gleitführungen eingespurt werden können. Solcherart kann der gesamte Verlauf der lichtdurchlässigen Abdeckung fest verbaut sein, was aus gestalterischer Hinsicht und zur Abwehr von Vandalismus vorteilhaft ist.

### Kurzbeschreibung der Zeichnungen

Es zeigen beispielhaft:
**Fig.1** Beleuchtungseinrichtung Längsschnitt.
**Fig.2** Beleuchtungseinrichtung Querschnitt.
**Fig.3** Beleuchtungseinrichtung.

### Ausführung der Erfindung

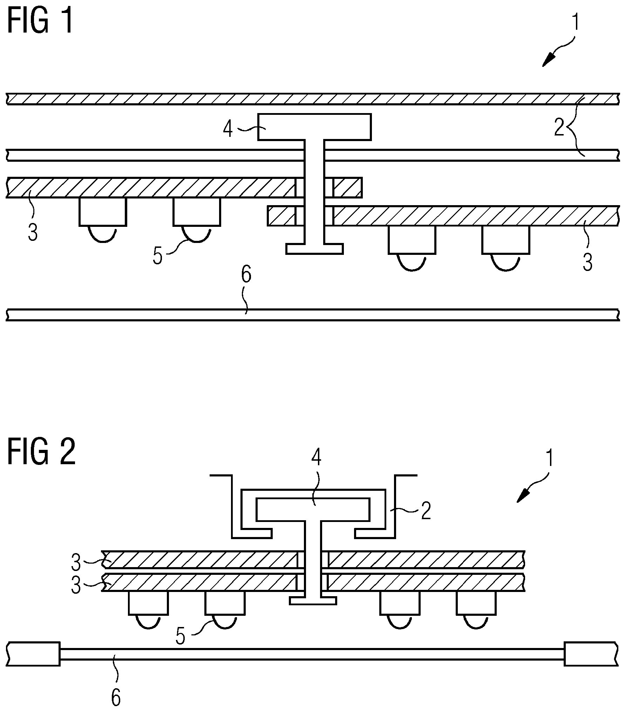

**Fig.1** zeigt beispielhaft und schematisch einen Längsschnitt durch eine Beleuchtungseinrichtung. Es ist ein Längsschnitt durch einen Abschnitt einer Beleuchtungseinrichtung 1 dargestellt, welche sich Einbaulage befindet. Die Beleuchtungseinrichtung 1 umfasst eine Mehrzahl an Beleuchtungsmodulen 3, ausgestattet mit Leuchtmitteln 5, welche untereinander kettenförmig verbunden sind. Diese Verbindung erfolgt durch einen jeweils zwei benachbarte Beleuchtungsmodule 3 durchdringenden Führungsbolzen 4. Dieser Führungsbolzen 4 ist durch Bohrungen in den Beleuchtungsmodulen 3 geführt und ermöglich eine gegenseitige Drehbeweglichkeit der jeweils verbundenen Beleuchtungsmodule 3 um die Längsachse des Führungsbolzens 4. Das weitere Ende des Führungsbolzens 4 ist mit einer Ausformung zum Eingriff in eine Gleitführung 2 ausgestattet, in welcher er schiebbar angeordnet ist. Solcherart ist eine Kette aus Beleuchtungsmodulen 3 gebildet, die sich nacheinander über ihre Führungsbolzen 4 in die Gleitführung 2 einspuren lassen und dem Verlauf der Gleitführung 2, auch wenn diese gebogene Abschnitte umfasst folgen kann. Die Beleuchtungseinrichtung 1 ist mit einer lichtdurchlässigen Abdeckung 6 verschlossen, welche das Licht der durch die Leuchtmittel 5 abgestrahlt wird durchtretet lässt. Diese lichtdurchlässigen Abdeckung 6 kann fest angeordnet sein, da ein Einbringen oder Entfernen der Beleuchtungsmodule 3 von einem Ende der Gleitführung 2 aus erfolgen kann und ein unmittelbarer Zugriff auf die Beleuchtungsmodule 3 entlang ihrer Einbauposition nicht erforderlich ist.

**Fig.2** zeigt beispielhaft und schematisch einen Querschnitt durch eine Beleuchtungseinrichtung. Es ist ein Schnitt durch die Beleuchtungseinrichtung 1 aus Fig.1 quer zur Längsachse der Gleitführung 2 dargestellt. Dabei ist besonders der formschlüssige Eingriff des Führungsbolzens 4 in die Gleitführung 2 ersichtlich. Im Bereich der Bohrung, durch welche der Führungsbolzen 4 die Beleuchtungsmodule 3 durchdringt überlappen sich diese Beleuchtungsmodule naturgemäß. Die Gleitführung 2 ist als sogenannte C-Schiene ausgeführt.

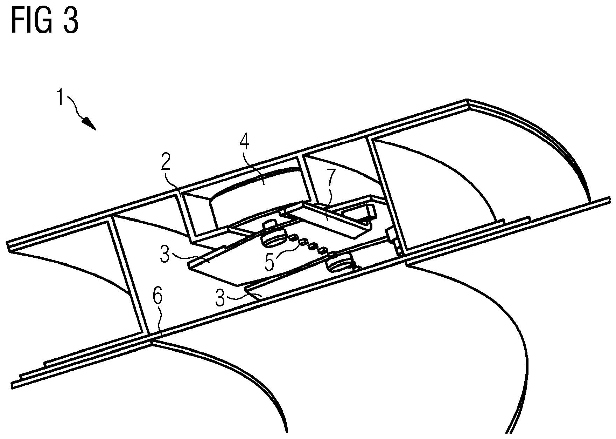

**Fig.3** zeigt beispielhaft und schematisch eine Beleuchtungseinrichtung. Es ist eine Schrägansicht auf eine Beleuchtungseinrichtung 1 in Einbaulage dargestellt, welche eine Mehrzahl an Beleuchtungsmodulen 3 umfasst, die untereinander kettenförmig mittels Führungsbolzen 4 verbunden sind. Die Führungsbolzen 4 greifen mit einem ihrer Enden formschlüssig in eine Gleitführung 2 ein, welche in gezeigtem Ausführungsbeispiel als gebogene C-Schiene ausgeführt ist. Die Beleuchtungsmodule 3 sind untereinander mittel Verbindungskabel 7 elektrisch verbunden. Die Länge der Verbindungskabel 7 ist dabei auf die minimalen Biegeradien der Kette aus Beleuchtungsmodulen 3 zu bemessen. Eine lichtdurchlässige Abdeckung 6 ist fest mit einer Innenverkleidung verbunden und nicht ohne sehr aufwendige Demontagearbeiten abnehmbar.

### Liste der Bezeichnungen

- 1: Beleuchtungseinrichtung
- 2: Gleitführung
- 3: Beleuchtungsmodul
- 4: Führungsbolzen
- 5: Leuchtmittel
- 6: Lichtdurchlässige Abdeckung
- 7: Verbindungskabel

## Patentansprüche

1. Beleuchtungseinrichtung (1) für ein Fahrzeug, umfassend eine mit dem Fahrzeug verbindbare Gleitführung (2) und eine Mehrzahl an Beleuchtungsmodulen (3),
**dadurch gekennzeichnet, dass** die Beleuchtungsmodule (3) untereinander kettenförmig und flexibel verbindbar sind und jeweils mit mindestens einem Führungsbolzen (4) ausgestattet sind, welcher sowohl für den formschlüssigen Eingriff in die Gleitführung (2) als auch zur kettenartigen flexiblen Verbindung der Beleuchtungsmodule (3) untereinander ausgebildet ist, und wobei die Beleuchtungseinrichtung (1) mit einer fest angeordneten lichtdurchlässigen Abdeckung (6) verschlossen ist, durch welche das von den Leuchtmitteln (5) abgestrahlte Licht durchtritt

2. Beleuchtungseinrichtung (1) für ein Fahrzeug nach Anspruch 1,
**dadurch gekennzeichnet, dass** die Beleuchtungsmodule (3) als Platinen mit an diesen Platinen angeordneten Leuchtmitteln (5) ausgeführt sind.

3. Beleuchtungseinrichtung (1) für ein Fahrzeug nach Anspruch 1,
**dadurch gekennzeichnet, dass** die Leuchtmittel (5) lichtemittierende Dioden sind.

4. Beleuchtungseinrichtung (1) für ein Fahrzeug nach Anspruch 1,
**dadurch gekennzeichnet, dass** die Gleitführung (2) als Ausformung mit C-förmigen Querschnitt eines Leichtmetall-Strangpreßprofils ausgeführt ist.

5. Beleuchtungseinrichtung (1) für ein Fahrzeug nach einem der Ansprüche 1 bis 4,
**dadurch gekennzeichnet, dass** die Gleitführung (2) entlang ihres Verlaufs mindestens einen bogenförmigen Abschnitt umfasst.

## Claims

1. Illumination device (1) for a vehicle, comprising a sliding guide (2) connectable to the vehicle and a plurality of illumination modules (3),
**characterized in that** the illumination modules (3) are connectable to one another flexibly in the form of a chain and are each equipped with at least one guide pin (4) that is embodied both for the form-fitting engagement in the sliding guide (2) and for the chain-type flexible connection of the illumination modules (3) to one another, and wherein the illumination device (1) is closed by a fixedly arranged light-transmissive covering (6) through which the light emitted by the light-emitting means (5) passes.

2. Illumination device (1) for a vehicle according to Claim 1, **characterized in that** the illumination modules (3) are embodied in the form of printed circuit boards with light-emitting means (5) arranged on said printed circuit boards.

3. Illumination device (1) for a vehicle according to Claim 1, **characterized in that** the light-emitting means (5) are light-emitting diodes.

4. Illumination device (1) for a vehicle according to Claim 1, **characterized in that** the sliding guide (2) is designed as a form having a C-shaped cross section of a light metal extruded profile.

5. Illumination device (1) for a vehicle according to one of Claims 1 to 4, **characterized in that** the sliding guide (2) comprises at least one arcuate section along its extent.

## Revendications

1. Dispositif d'éclairage (1) pour un véhicule, comportant une coulisse (2) susceptible d'être reliée au véhicule ainsi qu'une pluralité de modules d'éclairage (3),
**caractérisé en ce que** les modules d'éclairage (3) peuvent être reliés entre eux de manière flexible sous forme de chaîne et sont équipés chacun d'au moins un boulon de guidage (4) conçu aussi bien pour un engagement positif dans la coulisse (2) que pour une connexion flexible sous forme de chaîne des modules d'éclairage (3) entre eux, et le dispositif d'éclairage (1) étant obturé par un couvercle transparent (6) monté de manière fixe, à travers lequel passe la lumière émise par les moyens d'éclairage (5).

2. Dispositif d'éclairage (1) pour un véhicule selon la revendication 1,
**caractérisé en ce que** les modules d'éclairage (3) sont réalisés sous forme de platines comprenant des moyens d'éclairage (5) montés sur celles-ci.

3. Dispositif d'éclairage (1) pour un véhicule selon la revendication 1,
**caractérisé en ce que** les moyens d'éclairage (5) sont des diodes électroluminescentes.

4. Dispositif d'éclairage (1) pour un véhicule selon la revendication 1,
**caractérisé en ce que** la coulisse (2) est moulée à section en C d'un profilé extrudé en alliage léger.

5. Dispositif d'éclairage (1) pour un véhicule selon l'une des revendications 1 à 4,
**caractérisé en ce que** la coulisse (2) comporte, le long de son tracé, au moins un tronçon cintré.
